Europäisches Patentamt

European Patent Office

Office européen des brevets

(11) Publication number: **0 417 052 A1**

# EUROPEAN PATENT APPLICATION

(21) Application number: 90830389.4

(22) Date of filing: 04.09.90

(51) Int. Cl.5: **B62D 1/18**

(30) Priority: 04.09.89 IT 2162189

(43) Date of publication of application:
13.03.91 Bulletin 91/11

(84) Designated Contracting States:
AT BE CH DE ES FR GB LI SE

(71) Applicant: SIAC S.r.l.
Via Bergamo, 10
I-24040 Pontirolo Nuovo (Bergamo)(IT)

(72) Inventor: Alicata, Antonello, SIAC S.r.l.
Via Bergamo, 10
I-24040 Pontirolo Nuovo (Bergamo)(IT)
Inventor: Gerbelli, Domenico, SIAC S.r.l.
Via Bergamo, 10
I-24040 Pontirolo Nuovo (Bergamo)(IT)

(74) Representative: Cicogna, Franco
Ufficio Internazionale Brevetti Dott.Prof.
Franco Cicogna Via Visconti di Modrone,
14/A
I-20122 Milano(IT)

(54) Control device for adjusting the angular position of the steering column of a motor vehicle.

(57) A control device (10, 12) for adjusting the angular position of the steering column of a motor vehicle comprises a coupling arrangement associated with the steering column and located between the steering column and a steering column supporting structure, adapted to provide a mutual locking under efforts and inpacts and disengage the coupling under set outer driving conditions.

FIG.1

## BACKGROUND OF THE INVENTION

The present invention relates to a control device which has been specifically designed for adjusting the angular position of the steering column of a motor vehicle.

As is known,on motor vehicle in general and,in particular,on tractors,it is necessary to properly adjust the angular position of the steering wheel.

The adjustement of the steering column allows the motor vehicle driver to achieve a greater drive performance as well as a safer drive condition.

In this connection it should be apparent that each adjusted position of the steering column must be as safe as possible,while holding good operating characteristics,with the possibility of carrying out adjustments within a broad range.

In particular, in the case of agricultural vehicles, but also in the case of industrial vehicles,the driver must frequently use the steering wheel as a force point in order to enhance the braking operations,and press on the wheel during the drive, for example because of sudden braking interventions.

The steering wheel, moreover, must be adjusted in a very simple and quick way from the driver seat,in particular as the wheel position variation is related to an improvement of the access and outlet space to/from the driver seat,and any adjusted position should be easily re-found with simple operations.

More specifically it would be advantageous if the position adjustment would be independent from a subjective intervention by the driver since is the steering column would loose it adjusted position during the drive, then it could damage the driver or other persons.

This steering column or wheel adjustment is at present carried out mainly by two method which,however, are affected by substantial drawbacks.

The first of this method, in particular, is based on a friction clamping principle,and the steering column is affixed at any adjusted position by means of a friction element proper,or by a direct metal to metal contact.

In this method,in order to perform the adjustment operations, it is necessary to carry out manual clamping and unlocking operations and, to this end, there is usually provided a control lever which must be operated either by a hand or a foot, through a comparatively broad operation range.

Moreover,the operator must apply a comparatively high manual effort both for assuring the locking and for performing the unlocking operation, with the further drawback that the control lever must have suitable gripping features and a travel range adapted to provide a good operation of the system.

The second above mentioned prior method provides for the use of a rack portion,rigid with the steering column,therewith a toothed element is engaged.

In this method, the movement to be carried out for driving the steering column is rather limited, since it will exclusively depend on the disengagement of the mentioned toothed element,which is usually held in its position in the housing of the engagement tooth by a spring.

The effort to be applied,accordingly, will be exclusively that which is necessary to overcome the return spring.

Since this method requires the use of precisely shaped teeth, it does not allow a continuous movement for adjusting the steering wheel,but a discrete or step mo vement which is related to the number of the teeth of the rack portion and hook element.

Moreover, there occurs an accidental resistance to the adjustment movement which is strictly related to the distance from the pivot point of the steering column and rack portion.

To the foregoing it is to be added that the shape and size of the teeth must be accurately designed in order to prevent the adjustment device from accidentally disengaging under impact or strain conditions.

## SUMMARY OF THE INVENTION

Accordingly,the aim of the present invention is to overcome the above mentioned drawbacks,by providing a control device for adjusting the angular position of the steering column of a motor vehicle which is so designed and arranged as to provide a safe engagement under any strain and loading conditions.

Within the scope of the above mentioned aim,a main object of the present invention is to provide such a control device which is adapted to easily define a plurality of adjustment position,with a nearly continuous adjustment range.

Another object of the invention is to provide such a control device which has a substantially automatic locking capability.

Yet another object of the invention is to provide such a control device which can be easily made starting from easily available elements and materials and which,moreover,is advantageous from a mere economic standpoint.

According to one aspect of the present invention, the above mentioned aim and objects, as well as yet other objects,which will become more apparent hereinafter, are achieved by a control device for adjusting the angular position of a steering column of a motor vehicle, characterized in that said device comprises coupling means arranged between said steering column and a steering column supporting structure adapted to provide a mutual locking under any strain and loading conditions and disengage from said steering column as operated from outside.

BRIEF DESCRIPTION OF THE DRAWINGS

Further characteristics and advantages of the present invention will become more apparent from the following detailed disclosure of a preferred,though not exclusive embodiment,of a control device which has been specifical ly designed for adjusting the angular position of a motor vehicle steering column and which is illustrated, by way of an indicative but not limitative example,in the figures of the accompanying drawings, where:

FIGURE 1 is a partial sectional view of the control device according to the present invention; and

FIGURE 2 is a top plan view of the control device according to the invention.

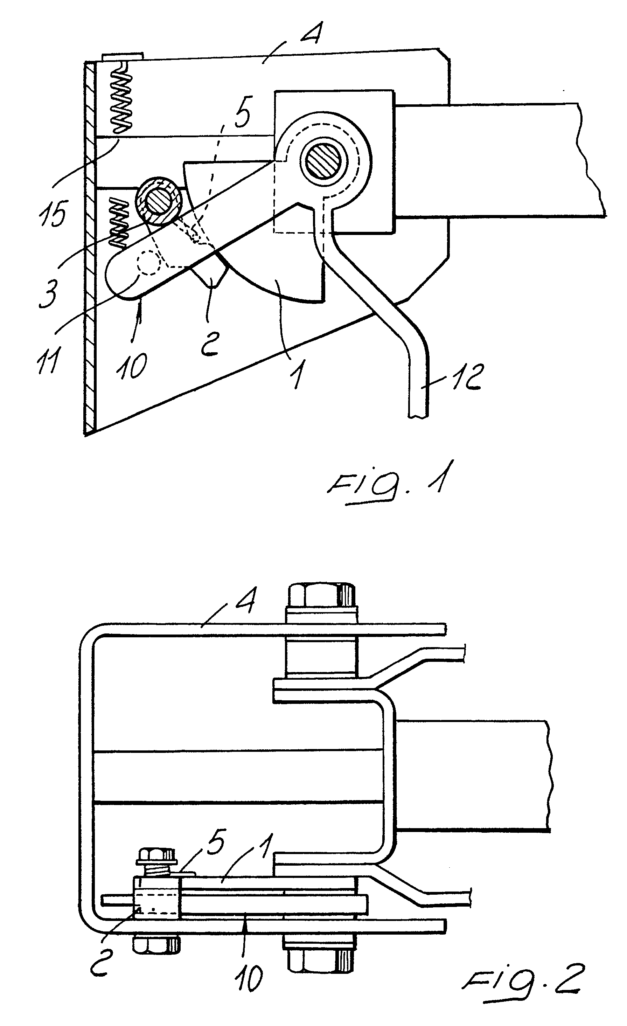

DESCRIPTION OF THE PREFERRED EMBODIMENT

With reference to the figures of the accompanying drawings, the control device for adjusting the angular position of the steering column of a motor vehicle according to the present invention comprises a tooth portion 1,which can have any suitable shape and is provided with a plurality of suitable teeth.

Advantageously, said tooth portion 1 is made of a metal material,but it should be apparent that any suitable plastic material can also be used.

The tooth or pawl 2 is affected by a disengaging spring 5,or,if desired, said pawl 2 can be so arranged as to disengage by gravity from the tooth portion or rack 1.

The number of the teeth,as well as the size and shape thereof,can be changed at will,depending on the number of adjustment positions to be obtained, arrangement thereof with respect to the pivot point of the steering column as well as depending on the designed loading.

With the pawl 2 there is engaged a control lever 10 which,in the embodiment being disclosed,is pivoted at the pivot point of the steering column,but which can be otherwise coupled to the supporting structure 4.

As shown,the control lever 10 is provided,at one end thereof,with a small engagement roller 11,whereas, at the other end thereof,it is provided with a driving element,indicated overalls at the reference number 12.

The roller 11,which,advantageously,is made of a metal material possibly coated by a resilient material, engages with the pawl 2,in order to push it to a coupling position with respect to the rack or tooth portion 10

The control lever 10,in turn,is held in its locking position by means of a return spring,indicated at 15,or by other like elements which can comprise a pressure spring,a flexure spring or a gas spring.

The pawl 2 is provided,on the portion thereof engaged with the small roller 10,with such a profile that,with the control lever in a rest condition or position,the small roller 11 will held the teeth of the pawl engaged in the corresponding teeth of the rack portion, at the selected position for the steering column.

Said pawl can not be disengaged from the rack, provided that it is not subjected to a force causing the teeth to be broken or the restraining pins to be damaged;on the other hand,these elements can be easily and safely designed by those skilled in the art.

By operating the control lever 10 with a variable travel range,the roller 11, as it is engaged on the profile of the pawl,will cause said pawl to be disengaged from the rack so as to allow the angular position of the steering column to be freely adjusted.

As the control lever 10 is released,the small roller will tend to return to its starting position:thus, as the pawl teeth engage the rack teeth,the device will be automatically locked.

Of course it is also possible to operate to cause manually the small roller to be returned to its starting position,thereby locking the driving device of the steering column.

From the above disclosure it should be apparent that the invention fully achieves the intended aim and objects.

In particular it is to be pointed out that the control device according to the present invention is so designed and arranged that accidental impacts or strains do not cause a disengagement of the coupling between the pawl and rack.

Moreover,as the control lever is released,the pawl will be automatically arranged in its locking position, since the control lever is so designed as to cause the pawl 2 to engage with the rack portion 1.

While the invention has been disclosed and illustrated with reference to a preferred embodiment thereof,it should be apparent that the disclosed embodiment is susceptible to several modifications and variations all of which will come within the spirit and scope of the appended claims.

## Claims

1- A control device for adjusting an angular position of a steering column of a motor vehicle,characterized in that said control device comprises coupling means arranged between said steering column and a steering column supporting structure,adapted to provide a mutual locking of said steering column under any strain and loading conditions and disengage from said steering column as said coupling means are operated from an outside position.

2- A control device according to claim 1,characterized in that said coupling means comprise a rack portion rigid with said steering column at a portion thereof which must be angularly adjusted,a pawl being moreover provided for removably engaging said rack portion,said pawl being coupled to said supporting structure and engaging with a control lever adapted to cause said pawl to be held in removable engagement with said rack portion.

3- A control device according to claim 3,characterized in that said control lever is provided with a driving arm accessible from outside,and supports a roller which can be engaged with said pawl so as to cause said pawl to engage with said rack portion.

4- A control device according to claim 1,and further characterized in that said control device comprises a disengagement spring to disengage said pawl from said rack portion as said control lever is actuated.

5- A control device according to claim 1,and further characterized in that said control device comprises resilient return means acting on said control lever to hold said control lever engaged with said pawl.

6- A control device according to claim 5,characterized in that said resilient return means comprise a return spring a pressing spring,a pulling spring, a gas spring and the like.

Fig. 1

Fig. 2

European
Patent Office

EUROPEAN SEARCH
REPORT

Application Number

EP 90 83 0389

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 155 596   (NIPPON SEIKO)<br>* Claims; figures * | 1-6 | B 62 D 1/18 |
| X | PATENT ABSTRACTS OF JAPAN, vol. 11, no. 392 (M-653), 13th July 1987;<br>& JP-A-62 157 863 (DAIHATSU MOTOR CO., LTD) 13-07-1987 | 1,2 | |
| X | GB-A-1 151 135   (DAVID BROWN TRACTORS)<br>* The whole document * | 1,2 | |

TECHNICAL FIELDS
SEARCHED (Int. Cl.5)

B 62 D

The present search report has been drawn up for all claims

| Place of search | Date of completion of search | Examiner |
|---|---|---|
| The Hague | 07 December 90 | PIRIOU J.C. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document